# EUROPEAN PATENT APPLICATION

(11) **EP 1 150 055 A2**
(43) Date of publication of application: **31.10.2001**
(21) Application number: 01303806.2
(22) Date of filing: 26.04.2001
(51) Int. Cl.: F16L 1/00, G01S 5/02, B29C 65/02, B29C 65/34

(54) **Method and apparatus for forming a pipeline**

(30) Priority: 26.04.2000 GB 0009998
(71) Applicant: Glynwed Pipe Systems Limited, Coleshill, Birmingham B46 3BP (GB)
(72) Inventor: Wilkinson, Kevin, Bretfield Court, Dewsbury WF12 9DB (GB)
(74) Representative: Pawlyn, Anthony Neil

(57) **Abstract**

The invention provides a method and apparatus for accurately recording the position of pipelines and features thereof for future use. The information may be combined with information from other sources and / or for other pipelines. The information may be used in the planning and / or control of work in the areas around pipelines in the future.

## Description

This invention concerns improvements in and relating to pipe forming systems, particularly, but not exclusively to positional information on the pipe formation process.

Pipelines can be formed in a number of ways from individual pipe lengths. Pipes can be push fitting to form a pipeline and/or joined by butt fusion and/or electrofusion.

In butt fusion, one or both of the ends of two pipe lengths which are to be joined together are heated to soften them. They are then held in firm contact with one another until the material cools and the join forms.

Electrofusion is commonly used to joint lengths of pipe together to produce a pipeline using a fitting type known as collars and/or to join other fitting types to pipe lengths, such as tapping tees, saddles etc.

Most pipe forming operations are performed in the field, often in remote locations, with the pipeline being formed in a trench which is then filled to bury the formed pipeline. In many cases the location of the pipeline is only poorly defined and even less information is known about the location of the join between pipe lengths, for instance the fitting position, on the pipeline. This is a particular problem in more remote and/or featureless locations were references against which the pipeline position can be fixed do not exist. Even with such problems, however, there is often a need to check the pipeline or fittings and/or repair the pipeline or fittings and/or modify the pipeline or fittings in some way. All of these operations require the pipeline to be found, excavated and the excavation continued until the location and/or fitting is uncovered. Such operations more often than not occur many years after the pipeline has been laid Given the limited information available finding the pipeline is a problem particularly as the pipeline being of plastic prevents most detection systems functioning. Above and beyond that finding a particular fitting on the pipeline is an even greater problem.

The present invention has amongst its aims to provide improved information about the position of a pipeline. The present invention has amongst its aims to provide improved information about particular parts of a pipeline, particularly joints and/or fittings on the pipeline. The present invention has amongst its aims the provision of and dissemination of positional information in a variety of useful manners.

According to a first aspect of the invention we provide a method of forming a pipeline, the pipeline including one or more features, the method involving arranging a first component and a second component in contact with one another and joining the first component to the second component, wherein the position of one or more of the features of the pipeline is recorded using a receiver, the position of the receiver being determined by triangulation based measurements using signals from three or more separate satellites.

The first and second components may be placed in contact with one another by inserting a first portion of one of the first or second components within another portion of the other. Preferably the first portion is a close fit to the another portion. Preferably the insertion forms a watertight joint between the first and second components.

The first and second components may be joined by a butt fusion. The first and second components may be held in contact with one another, particularly during cooling. The first and second components may both be pipe lengths.

The first and second components may be joined by an electrofusion. The first and second components may be held in contact with one another, particularly during cooling. The first and second components may be a fitting and a pipe length, respectively. The pipe length and/or fitting may be joined to a third component. The third component is preferably a further pipe length. The first and second components may be joined to one another simultaneously with the joining of the first and third components

According to a second aspect of the invention we provide a method of forming a pipeline using fusion, the pipeline including one or more features, the method including the acts of arranging a first component and a second component in contact with one another, one or both of the components being heated under the control of a control unit, the control unit being connected to a power supply, the first component and second component being provided in contact with one another with at least one of the first or second component heated, the first and second component being allowed to cool thereby joining the first component to the second component, wherein the position of one or more of the features of the pipeline is recorded using a receiver, the position of the receiver being determined by triangulation based measurements using signals from three or more separate satellites.

The first and second components may be joined by a butt fusion. The first and second components may be held in contact with one another, particularly during cooling. The first and second components may both be pipe lengths.

The first and second components may be joined by an electrofusion. The first and second components may be held in contact with one another, particularly during cooling. The first and second components may be a fitting and a pipe length, respectively. The pipe length and/or fitting may be joined to a third component. The third component is preferably a further pipe length. The first and second components may be joined to one another simultaneously with the joining of the first and third components

The first and/or second aspects of the invention may include any of the following features, options or possibilities.

The pipeline may be formed by excavating a trench, forming the pipeline in proximity with it and burying the pipeline after formation. The pipeline may be formed by joining a plurality of pipe lengths together. The same or different joint forms may be used to connect various pairs of pipe lengths together. The pipeline may be formed with one or more pipelines leading from or to it. The pipeline may include one or more changes of direction. Changes of direction preferably occur at a joint. The pipeline may have parts of different diameters to one another.

The feature for which the position is recorded may be the position of a join between a first component and second component. The feature may be a fitting on the pipeline. The feature may be a collar or tee or tapping tee or saddle or elbow or reducer. Preferably the position of a plurality of, ideally each, fitting on a pipeline is recorded. Preferably the position of a plurality of, ideally each, joint on the pipeline is recorded.

The first component and second component may be arranged in contact with one another by inserting a portion of the second component within the first component. The first component and second component may be arranged in contact with one another by placing the first component on a part of the outside of the second component.

The first and second components may be pipe lengths. The first component may be a fitting and the second component a pipe length. A fitting may be one or more of a collar, tee, tapping tee, saddle, elbow or reducer.

The heating may be achieved through resistance heating, preferably of the first component. The heating preferably at least partially melts one or both of the first or second components.

The position of the feature may be measured by measuring the actual position of the feature. A receiver for measuring the position may be placed in contact with the feature before and/or during and/or after the joint formation. If the measurement of position is made before joint formation occurs then preferably the position is measured after the first and/or second component is brought into contact with the pipeline.

The position of a feature may be measured as equating to the position of a unit, ideally including the receiver for measuring position, attached to the first and/or second component and/or feature at one point during the pipeline formation. The point may be before and/or during and/or after the joint formation. If the measurement of position is made before joint formation occurs then preferably the position is measured after the first and/or second component is brought into contact with the pipeline. The receiver and/or unit may be attached to the feature and/or may be placed in contact with the feature. The receiver and/or unit may be spaced from the feature during measurement. The receiver and/or unit may be or be a part of the control unit for the fusion. The receiver and/or unit may be spaced from the feature by the separation of the feature and control unit. The spacing of the receiver and/or unit and the feature may be less than a known distance. The known distance may be the maximum length of the conductors used to connect the control unit and component which is heated, ideally the first component. The spacing of the receiver and/or unit and the feature may always be set up in a known direction. The known direction may be a predetermined magnetic bearing and/or grid bearing, for instance due north.

The position is preferably recorded within the receiver. The method may include downloading of the information, preferably to a data storage location. The information may be downloaded by taking the information and/or receiver to the data storage location. The information may be taken to the data storage location in printed form and/or on a machine readable carrier, such as a magnetic disc. The information may be downloaded using any of the options, possibilities or features provided for in applicant's co-filed patent application entitled "Improvements in and relating to fusion control systems" bearing internal reference P17806. The information may be downloaded periodically, for instance at the completion of each days work.

The information may be an expression of longitude and latitude. The information may be one or more grid references. The information may be a distance and bearing from a reference point. The information may include other non-positional information. The non-positional information may include one or more of, the duration of power application to the first component, the voltage applied, the voltage profile applied, the current applied, the current profile applied, the person performing the fusion, the legal entity performing the fusion, the fitting type, the individual identity of the fitting, the fitting manufacturer, the fusion control unit type, the individual identity of the fusion control unit, the fusion control unit manufacturer, the time of the fusion, the date of the fusion, the substance carried by the pipeline.

The data storage location may receive information from a plurality of performances of the method and/or for a plurality of pipelines and/or from a plurality of pipeline forming operations/operators/entities. The data storage location may receive information about pipelines not formed according to the method but for which positional information is available. The data storage location may combine such positional information with positional information obtained according to the invention. The data storage location may receive information about gas pipelines, water pipelines, oil pipelines or telecommunications systems.

Preferably the satellites are three of a larger number of satellites. The satellites may be dispersed so as to provide at least three satellites which are in line of sight from any location on earth. The satellites preferably transmit a signal which includes an identification of that satellite. The satellites preferably transmit a signal which includes an indication of the time that part of the signal was transmitted. The satellites preferably transmit a signal at one or more known frequencies. The satellites preferably transmit a signal which includes the position of the transmitting satellite and ideally of all the satellites.

The triangulation based measurements may measure the distance between the satellites and the receiver. The distance may be measured by time of flight for the signals, for instance using the time the signal was sent, time the signal arrived and the known speed of the signal. The distance may be measured based on a frequency shift in the signal relative to the known frequency the signal was transmitted at. The known positions for the at least three satellites and calculated distances between each satellite and the receiver may be used to give the receiver position. The calculation of the position is preferably performed by the receiver.

The method may include a determination of the position of the receiver using a second receiver. The second receiver's position is preferably fixed. The second receiver's position is preferably accurately known, ideally from non-satellite based measurements. The second receiver's position may correspond to the data storage location. Preferably the method considers the known position of the second receiver against a satellite based measurement of the second receivers position and determines one or more correction functions to account for the deviation between the two positions and then applies those correction functions to the position measured for the first receiver to give a corrected position for the feature. Preferably the corrected position forms the position information used in subsequent considerations, including those referred to elsewhere in this document.

According to a third aspect of the invention we provide apparatus for performing an fusion, preferably an electrofusion, operation in which a current is applied to a first component to heat at least the first component, the first component upon cooling joining the first component to a second component, one or both of the first or second components having a feature, the apparatus including a power source, a control unit and electrical conductors for providing current to at least one of the components, preferably the first component, the apparatus also including a receiver, the receiver having an antenna and a data processor, the data processor determined the position of the receiver based on triangulation based measurements using signals, received by the antenna, from three or more separate satellites, the receiver equating the position determined for the receiver with the position of one or more of the features of the pipeline, the receiver recording that position.

The third aspect of the invention preferably includes the options, possibilities and features set out elsewhere in this document including the first and/or second aspects of the invention.

According to a fourth aspect of the invention we provide a method of exposing a selected feature of a pipeline, the method including obtaining information on the selected feature's position on the pipeline, providing excavation equipment near the position of the selected feature and excavating a portion of the ground which includes the selected position wherein the position of the portion of the ground which is excavated is checked against the position of the selected feature using a receiver, the position of the receiver being determined by triangulation based measurements using signals from three or more separate satellites.

The fourth aspect of the invention preferably includes the options, possibilities and features set out elsewhere in this document including the first and/or second aspects of the invention.

Preferably the information on the selected feature is obtained from a data storage location. Preferably the information in the data storage location is at least in part provided according to the method of the first and/or second aspects of the invention.

The method may further include performing an operation on the pipeline. The operation may be the addition and/or modification and/or removal of a feature of the pipeline. Preferably the position of the addition and/or modification and/or removal of a feature of the pipeline is determined, preferably according to the method of the first and/or second aspects of the invention. Preferably the position of the addition and/or modification and/or removal of a feature of the pipeline is used to update the information stored at a data storage location, ideally the data storage location.

The receiver may be provided as an integral part of the excavation equipment. The receiver may be used as a separate device to the excavation equipment. The receiver may be used to mark out the portion of the ground to be excavated, for instance by providing physical markings at the working area.

According to a fifth aspect of the invention we provide a method of controlling work near a pipeline, the method including determining an area for which work is intended, obtaining information from a data storage location on the position of any pipelines in the intended work area, forming an exclusion zone within the intended work area for a protection distance around any pipelines, providing working equipment within the intended work area, the working equipment being subject to work restrictions within the exclusion zone, wherein the position of working equipment is checked against the position of the exclusion zone using a receiver, the position of the receiver being determined by triangulation based measurements using signals from three or more separate satellites.

The fifth aspect of the invention preferably includes the options, possibilities and features set out elsewhere in this document including the first and/or second aspects of the invention.

The controlling of the work may be prevention of the work and/or selection of an alternative intended work area and/or selection of an alternative work plan within the intended work area and/or the provision of supervision of any work within the work area and/or restriction on the type of work which can be performed and/or restriction on the equipment available to perform the work.

The determination of the intended work area may be the determination of an area for which a trench and/or pipeline and/or tunnel and/or excavation and/or pile driving and/or other ground disrupting activity is planned. The intended work area may extend around and/or below and/or above the position where work will actually occur, for instance by an overlap distance. The overlap distance may be at least 2 metres, potentially at least 5 metres and ideally at least 20 metres.

The data may be obtained from the data storage location by uploading the information. The information may be uploaded to the receiver. Preferably the information in the data storage location is at least in part provided according to the method of the first and/or second aspects of the invention.

Preferably an exclusion zone is provided for all pipelines in the intended work area. Preferably the exclusion zone extends around and/or below and/or above the position of the actual pipeline. The protection distance may extend for at least 2 metres, potentially at least 5 metres and ideally at least 20 metres about the pipeline, most preferably in all directions.

The working equipment may be excavation equipment.

The working restriction may be that no work can occur within the exclusion zone and/or protection distance. The working restriction may be that only manual work can be performed in the exclusion zone and/or protection distance. The working restriction may be that supervision of the work is required

The receiver may be provided as an integral part of the working equipment. The receiver may be used as a separate device to the working equipment. The receiver may be used to mark out the exclusion zone and/or protection distance, for instance by providing physical markings at the working area.

Various embodiments of the invention will now be described, by way of example only. Particular emphasis is placed on pipe forming operations using electrofusion and subsequent matters effecting such pipelines which offer particular benefit, but the invention is applicable to pipeline forming processes in general, including through push fit and butt fusion forming.

Electrofusion uses resistance heating to partially melt a plastics component, generally referred to as a fitting, which upon cooling forms a seal. A fitting type called a collar is frequently used to join to lengths of pipe together. The collar is in the form of a hollow cylinder into which the ends of the respective lengths of pipe are inserted from opposing directions. A series of pipe lengths and fittings form a pipeline. Other types of fitting are used to achieve other functions: reducers to join different pipe sizes; tees to connect spur pipes; saddles to join larger pipes; elbows to change the direction of the pipeline, etc.

To provide durability it is imperative that the joints/seals are formed to the highest standard. Even so problems can occur and repair may be needed. In other cases it may simply be necessary to inspect the pipe or attach a pipeline travelling in another direction to it. All these operations need the pipeline to be found and uncovered.

In other cases other operations will be performed in the area, for instance building work, laying other pipelines etc, and these must be conducted safely without disturbing the pipeline.

Finding the pipeline many years after it has been laid is a problematical operation. Particularly in remote areas there may be no features relative to which the pipeline's position could have been considered. Even if the approximate location is known it may take considerable effort to find the pipeline. As the pipeline is formed of plastics, metal detectors and a variety of other detection techniques will not work. Thus trenches across the perceived direction of the pipeline are often made. Any problem in finding the pipeline represents a time consuming and hence costly delay. Trying to excavate a pipeline not knowing where it is also carries safety risks if the pipeline is accidentally damaged, for instance by impact from an excavator. The problems in finding the pipeline are less, however, than the problems faced in finding a particular location on it, such as a fitting.

The present invention aims to address the above mentioned problems and provide other benefits.

In use the fitting to be electrofused is positioned in contact with the pipe and electrical contacts are attached to link the terminals on the fitting to the power control unit for the electrofusion operation. The electrofusion operating variables (voltage, current, duration of application) may be set in a variety of ways. For instance, the conditions may be read from a barcode on the fitting and/or may be manually inputted and/or may be inputted in another way. The electrofusion is then operated, the fitting is allowed to cool and the joint/seal is finished.

In conjunction with this operation and surrounding information gathering exercise, the present invention makes use of triangulation measurements using three or more satellites and one or more ground based receivers to provide an accurate record of the location at which the electrofusion operation was performed.

The detailed information relating to and/or giving the position of the electrofusion control unit is recorded by the unit. The same recording facility may also be used to record the fitting type, fitting size, current, voltage, time of application, date and/or time the operation was performed, who performed the operation, and potentially other information. All this information can be conveyed to a central storage facility periodically for subsequent use.

The manner in which the information relating to the position and/or the position defining information is used is described in more detail below.

Once obtained, however, the positional information can be used in a variety of ways. Uses for both the information individually and when compiled togther can be made, for instance.

Firstly each of the locations provides important information on that specific location and for the location of an individual fitting.

Secondly, the position information for a sequential series of fittings can be used to detail the route the pipeline takes. This can be combine with cartographic information, from other sources, to accurately represent the route of the pipeline.

If a party needs to access the pipeline and/or a fitting they can use the information from the storage facility in a number of ways too. Firstly, the position information for one or more fittings or a length of the pipeline could be inputted into a positioning system, with that positioning system then providing a directional indication to the party the direct the party needs to proceed in to reach the location of interest. As an alternative the party can take the information in some other form, a note for instance, and periodically monitor the positioning system they are using until they reach the location. Either way the result is that the party ends up in very close proximity with the location (pipeline and/or the fitting) of interest.

Once found the subsequent excavation process can then be very carefully and accurately progressed to expose the pipeline. Once finished the pipeline is reburied. Of course if an electrofusion operation is performed on the pipeline, or if another act needing logging is performed, this information is recorded and added to the centrally stored information in due course.

As well as being of use to a party wishing to find the pipeline, the information can also be provided to parties wishing to avoid the pipeline in operations they are undertaking. Thus a water utility operator could be provided with general information relating to the position of pipelines of a gas utility operator. If a task, for instance a new pipeline laying, of the water operator takes it close to the gas operators pipeline then detailed positional information on the pipeline can be provided. This information can allow advance planning to take the existing pipeline's position fully into account and/or can be used on site to control excavation and other operations for the new water pipeline to avoid damage or disturbance to the gas pipeline. The information generated as the water pipeline is formed can of course be added to a general database for all such pipelines and/or to the water operator's database.

As well as being used after the pipeline is being constructed the system could also be used as a control mechanism in its actual production. Thus the position measuring system which is on location during the electrofusion operations could be used to ensure that the position of the pipeline during its formation is within a predefined range of positions relative to one or more predetermined points. Adjustment to the location of the trench in which the pipeline is being formed could be provided if the excavation is measured as deviating too far from the desired position.

The manner in which the positional information is obtained is based on the principle of triangulation. To be able to achieve high accuracy throughout the world triangulation based on satellites with highly predictable positions are used to calculate the unknown position of the receiver. The satellites may belong to a number of operators, GPS or GLONASS for instance, and are carefully controlled and maintained to afford maximum predictability in their positions.

The position of the receiver could be determined based on the time of flight for a signal from a satellite to reach the receiver, each signal carrying a precise time indication and satellite identification. The known positions of the satellites and known speed of the signal (light) then being used to solve the position of the receiver. As a more accurate alternative, Doppler measurements (the extent of the shift in the frequency of the electromagnetic spectrum due to relative movement of the satellite and receiver) for the signal due to for the satellite signals can be used. In general two signal frequencies are used by the satellites, with each satellite using the same two frequencies with pseudo-random noise on them which modulate the signals. These, together with, the location of all the satellites and expected clock offsets which are transmitted by each satellite for all satellites (which may be the long term values held by the satellites or a periodically updated form), an identification code for the particular satellite sending a given signal are monitored by the receiver. The signal is subjected to carrier phase processing to obtain the number of cycles and so express a carrier phase. If continuous lock on the signal is maintained the receiver can keep track of the number of cycles that pass.

Normally a single channel is used for each satellite signal to maintain a lock on it and perform ongoing measurements, but multiplexing can be used.

Processing of this information is then used, generally firmware based, to effect repeated solutions of the position defining equations. An averaged result from many sets of signals may be used to generate the position or the position may be based on a single set. The positional information may be presented in a variety of different forms.

The accuracy of the positional information can be increased by a variety of equipment and/or processing routes.

Firstly, it is possible to provide antenna designs which are selective between the signal received direct from a satellite and scattered versions which take a less direct path and which would generate errors as a result if taken as the satellite signal.

Secondly it is possible to use a pair of receivers togther in a variety of ways. In each of the ways the second receiver is of very precisely known position. Even in real time significant improvements can be made by processing the information for the receiver of unknown position in the light of information from the known position receiver. In general carrier phase corrections are transmitted from the known position receiver. It is also possible to process the recorded information latter from the unknown position receiver. For instance, satellite clock errors can be eliminated in this way, with further processing removing receiver clock errors and with still further processing to detect cycle slips in carrier phase data.

Thirdly it is possible to make use of information from the encrypted military signals emitted by the same satellites. This signal is generally a bi-phase shift modulated on both frequencies of the basic signal. The signal is different in this case for each satellite. Crosscorrelation (considering the different speeds through the ionosphere of the encrypted signals carried by the two general signals speeds, obtaining the difference between the two, match, multiply to remove the code and so leave the carrier frequencies for measurement). Crosscorrelation and squaring (comparison of the actual two and an artificial such signal, the difference revealing the encrypted signal for each, which can be measured and squared to give the pure carrier frequencies),

A minimum of three satellites for longitudinal and latitudinal position determination is desirable, with a fourth satellite if altitude is to be provided. In general the more satellite signals which are available at useful strength the more accurate the position indication is.

Such systems provide positional information which offers accuracy to within a few metres (particularly in the twin receiver form), can provide such information within 1 or 2 minutes of switch on (fully suitable for electrofusion operations) and recover the necessary signals sufficiently quickly should they be lost.

As the actual electrofusion operation will be conducted at a distance from the electrofusion control unit, it would be possible to provide the antenna for the position information as part of the connectors which fasten the power cables to the fitting itself or as a component provided along side these. The entire position information processing unit could be provided at such a position. In this way the difference between the fitting position and the actual measured position is minimised. As a lower technology alternative the electrofusion control unit incorporating the position information providing system could always be positioned a set distance (measured using the power cable length for instance)in a set direction (for instance north) of the electrofusion site, the direction being indicated by the display of the position information providing system.

Many of the benefits provided above by the invention are assisted or supplemented by the inventive features provided in the applicant's co-filed patent application bearing title "Improvements in and relating to fusion control systems", internal reference code P17806.

## Claims

1. A method of forming a pipeline using fusion, the pipeline including one or more features, the method including the acts of arranging a first component and a second component in contact with one another, one or both of the components being heated under the control of a control unit, the control unit being connected to a power supply, the first component and second component being provided in contact with one another with at least one of the first or second component heated, the first and second component being allowed to cool thereby joining the first component to the second component, wherein the position of one or more of the features of the pipeline is recorded using a receiver, the position of the receiver being determined by triangulation based measurements using signals from three or more separate satellites.

2. A method of forming a pipeline, the pipeline including one or more features, the method involving arranging a first component and a second component in contact with one another and joining the first component to the second component, wherein the position of one or more of the features of the pipeline is recorded using a receiver, the position of the receiver being determined by triangulation based measurements using signals from three or more separate satellites.

3. A method according to claim 1 or claim 2 in which the feature for which the position is recorded is the position of a join between a first component and second component.

4. A method according to any preceding claim in which the feature is a fitting on the pipeline, such as a collar or tee or tapping tee or saddle or elbow or reducer.

5. A method according to any preceding claim in which the position of a plurality of, ideally each, fitting on a pipeline is recorded.

6. A method according to any preceding claim in which the position of the feature is measured by measuring the actual position of the feature.

7. A method according to any of claims 1 to 5 in which the position of a feature is measured as equating to the position of a unit, attached to the first and/or second component and/or feature at one point during the pipeline formation.

8. A method according to any preceding claim in which the position is recorded within the receiver and the method includes downloading of the information.

9. A method according to any preceding claim in which the information is an expression of longitude and latitude and / or the information is one or more grid references and / or the information is a distance and bearing from a reference point.

10. A method according to any preceding claim in which the information includes other non-positional information such as one or more of, the duration of power application to the first component, the voltage applied, the voltage profile applied, the current applied, the current profile applied, the person performing the fusion, the legal entity performing the fusion, the fitting type, the individual identity of the fitting, the fitting manufacturer, the fusion control unit type, the individual identity of the fusion control unit, the fusion control unit manufacturer, the time of the fusion, the date of the fusion, the substance carried by the pipeline.

11. A method according to any preceding claim in which the information is downloaded to a data storage location and the data storage location receives information from a plurality of performances of the method and/or for a plurality of pipelines and/or from a plurality of pipeline forming operations/operators/entities.

12. Apparatus for performing an fusion, preferably an electrofusion, operation in which a current is applied to a first component to heat at least the first component, the first component upon cooling joining the first component to a second component, one or both of the first or second components having a feature, the apparatus including a power source, a control unit and electrical conductors for providing current to at least one of the components, preferably the first component, the apparatus also including a receiver, the receiver having an antenna and a data processor, the data processor determined the position of the receiver based on triangulation based measurements using signals, received by the antenna, from three or more separate satellites, the receiver equating the position determined for the receiver with the position of one or more of the features of the pipeline, the receiver recording that position.

13. A method of exposing a selected feature of a pipeline, the method including obtaining information on the selected feature's position on the pipeline, providing excavation equipment near the position of the selected feature and excavating a portion of the ground which includes the selected position wherein the position of the portion of the ground which is excavated is checked against the position of the selected feature using a receiver, the position of the receiver being determined by triangulation based measurements using signals from three or more separate satellites.

14. A method according to claim 13 in which the information on the selected feature is obtained from a data storage location and the information in the data storage location is at least in part provided according to the method of any of claims 1 to 11.

15. A method according to claim 13 or claim 14 in which the method includes performing an operation on the pipeline such as the addition and/or modification and/or removal of a feature of the pipeline.

16. A method according to any pf claims 13 to 15 in which the position of the addition and/or modification and/or removal of a feature of the pipeline is determined according to the method of any of claims 1 to 11.

17. A method according to any of claims 13 to 16 in which the position of the addition and/or modification and/or removal of a feature of the pipeline is used to update the information stored at a data storage location, ideally the data storage location.

18. A method of controlling work near a pipeline, the method including determining an area for which work is intended, obtaining information from a data storage location on the position of any pipelines in the intended work area, forming an exclusion zone within the intended work area for a protection distance around any pipelines, providing working equipment within the intended work area, the working equipment being subject to work restrictions within the exclusion zone, wherein the position of working equipment is checked against the position of the exclusion zone using a receiver, the position of the receiver being determined by triangulation based measurements using signals from three or more separate satellites.

19. A method according to claim 18 in which the controlling of the work is prevention of the work and/or selection of an alternative intended work area and/or selection of an alternative work plan within the intended work area and/or the provision of supervision of any work within the work area and/or restriction on the type of work which can be performed and/or restriction on the equipment available to perform the work.

20. A method according to claim 18 or claim 19 in which the determination of the intended work area is the determination of an area for which a trench and/or pipeline and/or tunnel and/or excavation and/or pile driving and/or other ground disrupting activity is planned.

21. A method according to any of claims 18 to 20 in which the data is obtained from the data storage location by uploading the information.

22. A method according to any of claims 18 to 21 in which the information in the data storage location is at least in part provided according to the method of any of claims 1 to 11.

23. A method according to any of claims 18 to 22 in which the working restriction is that no work can occur within the exclusion zone and/or protection distance.

24. A method according to any of claims 18 to 22 in which the working restriction is that only manual work can be performed in the exclusion zone and/or protection distance.
